# EUROPEAN PATENT APPLICATION

(11) **EP 1 293 713 A2**
(43) Date of publication of application: **19.03.2003**
(21) Application number: 02019851.1
(22) Date of filing: 09.09.2002
(51) Int. Cl.: F16K 21/12

(54) **Timed faucet switchable to continuous dispensing**

(30) Priority: 13.09.2001 IT MI20011913
(71) Applicant: Carlo Nobili S.p.A. Rubinetterie, 28021 Borgomanero (Prov. of Novara) (IT)
(72) Inventor: Nobili, Alberto, 28021 Borgomanero (Prov. of Novara) (IT)
(74) Representative: Modiano, Guido, Dr.-Ing.

(57) **Abstract**

A timed faucet switchable to continuous dispensing, comprising a faucet body (2) which has at least one water inlet (3a, 3b) and at least one water 'outlet (4) and a flow control element (5) that is accommodated in the faucet body (2) and can move from an open position, in which it allows the water to flow from the inlet (3a, 3b) to the outlet (4), to a closed position, in which it interrupts the flow of the water from the inlet (3a, 3b) to the outlet (4), and vice versa. The flow control element (5) is movable on command from the closed position to the open position, and timed dispensing means (33, 34) are connected to the flow control element (5) for its automatic return from the open position to the closed position in a presettable time after the beginning of the dispensing action. The faucet (1) further comprises switching means (6) that can be activated on command in order to lock the flow control element in the open position.

## Description

The present invention relates to a timed faucet switchable to continuous dispensing.

Timed faucets are known in which the flow control element, after being moved manually to the open position, is automatically returned to the closed position by the combined action of elastic return means and of the flow of the water through the faucet.

These faucets are generally constituted by a substantially cylindrical body that is meant to be mounted on a hydraulic sanitary fixture, for example a washbasin, so that its axis is substantially vertical or inclined with respect to the vertical.

Inside the body of the faucet there is a substantially cylindrical flow control chamber that accommodates the flow control element, which can move on command along the axis of said chamber.

At least one water inlet is formed on the lateral surface of the faucet body, in the region affected by the flow control chamber, and at least one outlet is provided in a region that is spaced axially with respect to the region occupied by the inlet.

The connection between the inlet and the outlet occurs through the flow control chamber, which accommodates the flow control element, which has a sealing portion that is arranged between the inlet and the outlet and can be moved, by way of the axial movement of the flow control element, so as to engage an annular sealing seat arranged inside the flow control chamber in the region between the inlet and the outlet, so as to interrupt the connection between the inlet and the outlet, or can be moved away from the sealing seat so as to allow the connection between the inlet and the outlet.

The inlet is generally located below the outlet, and below the inlet, in the faucet body, there is an auxiliary chamber that is separated from the flow control chamber by means of a piston-shaped extension of the flow control element.

A calibrated passage is formed in said piston-shaped extension and is controlled by a needle-shaped element that connects the flow control chamber to the auxiliary chamber.

The movement of the flow control element from the closed position to the open position is actuated by means of a knob that is associated with the faucet body and protrudes upward from it. Substantially, by pressing the knob the sealing portion of the flow control element is moved away from the sealing seat, thereby causing the sliding of the extension of the flow control element inside the auxiliary chamber, consequently causing the evacuation from the auxiliary chamber, toward the flow control chamber, of most of the residual water contained in the auxiliary chamber. A spring is interposed between the faucet body and the knob and contrasts elastically the opening movement of the flow control element, causing its movement toward the closure position. Such closure movement, however, is slowed because a negative pressure is generated inside the auxiliary chamber and contrasts the action of the spring. This negative pressure is reduced gradually as a consequence of the flow of water through the calibrated hole formed in the piston-like extension of the flow control element. In this manner, the flow control element, by way of the elastic reaction of the spring, is returned gradually to the closed position and interrupts the dispensing of water a certain time after it has been opened.

These kinds of faucet are designed to be used mainly in public premises or communities or in any case when avoiding a useless waste of water, arising from careless use of the faucet, is sought.

Usually, the time that elapsed between the manual opening of the faucet and its automatic closure is such as to ensure the dispensing of an amount of water that is sufficient to perform a normal hand wash. Therefore, if the user needs more water, he has to repeat the manual opening of the faucet several times.

This fact is a limit to the convenience of use of these kinds of faucet.

The aim of the present invention is to solve the problem described above, by providing a timed faucet whose operation can be switched to continuous dispensing so as to meet the demand to dispense a greater quantity of water with respect to the quantity that can be obtained with timed dispensing, without forcing to repeat the manual operation of opening the faucet.

Within this aim, an object of the invention is to provide a faucet that thanks to this switchability is more practical to use than conventional-type timed faucets.

Another object of the invention is to provide a faucet in which switching from timed dispensing to continuous dispensing or vice versa can be performed very simply and easily.

Another object of the invention is to provide a faucet that can be manufactured at competitive costs.

This aim and these and other objects that will become better apparent hereinafter are achieved by a timed faucet switchable to continuous dispensing, comprising a faucet body which has at least one water inlet and at least one water outlet and a flow control element that is accommodated in said faucet body and can move from an open position, in which it allows the water to flow from said at least one inlet to said at least one outlet, to a closed position, in which it interrupts the flow of the water from said at least one inlet to said at least one outlet, and vice versa, said flow control element being movable on command from said closed position to said open position, timed dispensing means being connected to said flow control element for its automatic return from said open position to said closed position in a presettable time after the beginning of the dispensing action, characterized in that it comprises switching means that can be activated on command in order to lock said flow control element in said open position.

Further characteristics and advantages of the invention will become better apparent from the description of a preferred but not exclusive embodiment of the faucet according to the invention, illustrated only by way of non-limitative example in the accompanying drawings, wherein:
Figure 1 is an axial sectional view of a faucet according to the invention, with the flow control element shown in the closed position and with the switching means deactivated;
Figure 2 is an axial sectional view of the faucet of Figure 1, with the flow control element in the open position and with the switching means activated;

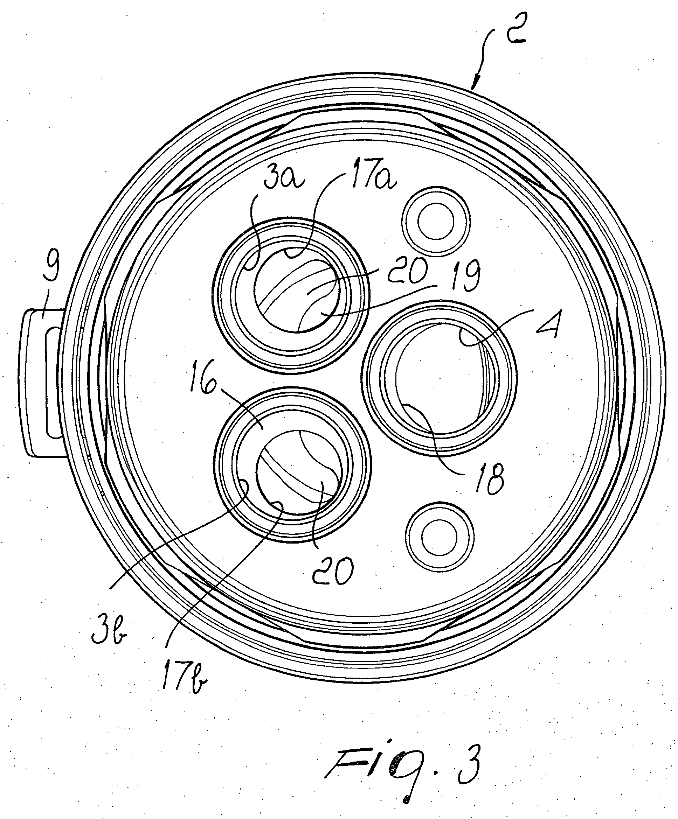

Figure 3 is an enlarged-scale bottom plan view of the faucet of the preceding figures.

With reference to the figures, the faucet according to the invention, generally designated by the reference numeral 1, comprises a faucet body 2 which has at least one water inlet 3a and 3b and at least one water outlet 4 and a flow control element 5 that is accommodated in the body of the faucet 2 and can move from an open position, in which it allows the water to flow from the inlet 3a and 3b to the outlet 4, to a closed position, in which it interrupts the flow of the water from the inlet 3a, 3b to the outlet 4, and vice versa. The flow control element 5 can move on command from the closed position to the open position, and timed dispensing means are provided that are connected to the flow control element 5 in order to make it return automatically from the open position to the closed position in a presettable time after the beginning of the dispensing action.

According to the invention, the faucet comprises switching means 6, which can be activated on command in order to lock the flow control element 5 in the open position.

The flow control element 5, in passing from the closed position to the open position and vice versa, can perform a translational motion with respect to the faucet body 2 along an actuation direction 7 and is connected to an actuation knob 8 that is arranged outside the faucet body 2 and is rigidly coupled to the flow control element 5 in its translational motion along the actuation direction 7.

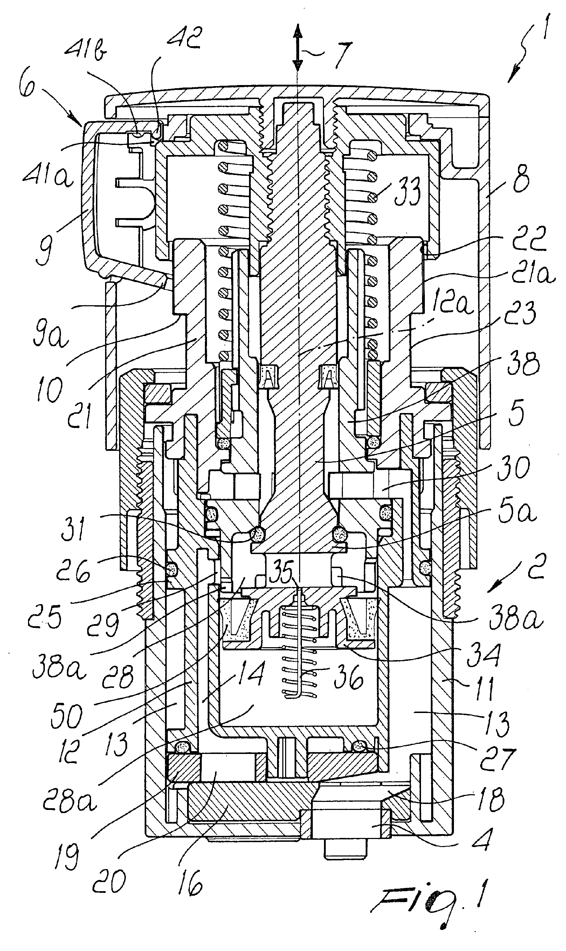

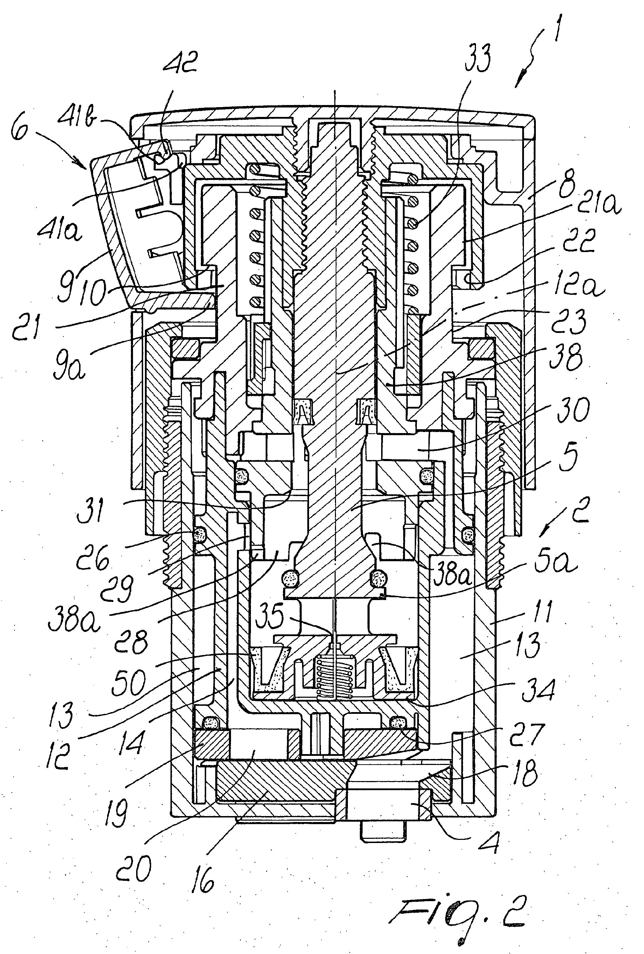

The switching means 6 are preferably constituted by a button 9, which is associated with the actuation knob 8 and can move on command from a deactivation position, shown in Figure 1, in which it does not interfere with the faucet body 2, to an activation position, shown in Figure 2, in which it engages an abutment 10 formed on the faucet body 2 so as to lock the translational motion of the actuation knob 8, and therefore of the flow control element 5, along the actuation direction 7 with respect to the faucet body 2.

The button 9 can move from the deactivation position to the activation position or vice versa when the flow control element 5 is in the open position.

The button 9 is partially accommodated in a seat provided in the lateral surface of the actuation knob 8 and protrudes from said seat with a portion thereof, so that it can be actuated manually.

Preferably, the button 9 is a lever-type button that is pivoted, by means of an intermediate portion, to the body of the knob 8 and can oscillate, about its fulcrum, in order to pass from the deactivation position, in which it cannot interfere with the faucet body 2, to the activation position, in which it reaches, with a portion 9a, below the abutment 10, when the flow control element 5 is in the open position, so as to lock the movement of the flow control element 5 toward the closure position.

The two positions of the button 9 are preferably defined stably by two seats 41a and 41b, which are provided in the actuation knob 8 and can be engaged by an elastically flexible tooth 42 of the button 9 respectively when said button is in the deactivation position and when it is in the activation position.

Although the concept underlying the present invention can be applied to any kind of timed faucet, the illustrated embodiment relates to a timed faucet of the type disclosed in Italian patent application no. MI99A-00567 by the same Applicant. Such faucet type has two inlets 3a and 3b, respectively for hot water and for cold water, and allows to perform, by way of the actuation knob 8, an adjustment of the temperature of the water that exits from the outlet 4 and to adjust the flow-rate of the dispensed water, as will become better apparent hereinafter.

More particularly, the illustrated faucet comprises means for adjusting the passage section of the inlets 3a and 3b so as to vary the ratio between the hot water flow-rate and the cold water flow-rate entering the faucet body 2, thus allowing to regulate the temperature of the dispensed water. Said adjustment means are accommodated in the faucet body 2 and are connected to actuation means that are supported by the faucet body 2 and can be operated from the outside of said faucet body 2.

Conveniently, said actuation means are constituted by the actuation knob 8 proper, as will become better apparent hereinafter.

The faucet body 2 is meant to be accommodated in a suitable seat provided in the hydraulic sanitary fixture, for example a dispensing outlet, which must be served by the faucet 1 so as to protrude with the actuation knob 8 from the body of the hydraulic sanitary fixture.

The faucet body 2 comprises an outer enclosure 11 that is substantially cylindrical and can be fixed to the hydraulic sanitary fixture so that its axis is vertical or inclined with respect to the vertical. The faucet body 2 further comprises an inner enclosure 12, which is also substantially cylindrical and is arranged internally and coaxially with respect to the outer enclosure 11. The lower base of the outer enclosure 11 is crossed by the inlets 3a, 3b and by the outlet 4. The inlets 3a, 3b are connected, in the body of the hydraulic sanitary fixture, respectively to ducts for feeding hot and cold water, while the outlet 4 is connected to the dispensing outlet of the hydraulic sanitary fixture.

A first chamber 13 is defined between the outer enclosure 11 and the inner enclosure 12 and is connected to the outlet 4.

A second chamber 14 is defined inside the inner enclosure 12 and is connected to the first chamber 13 by means of a flow control chamber 28 that will be described better hereinafter.

The bottom of the first chamber 13 is preferably constituted by a first ceramic plate 16, which is locked inside the outer enclosure 11 so that it cannot rotate with respect to said outer enclosure 11 about its axis. The first ceramic plate 16 is crossed by three holes 17a, 17b and 18, which are arranged respectively at the inlets 3a, 3b and at the outlet 4. The hole 18 is connected to the first chamber 13.

The lower base of the inner enclosure 12 is connected, so as to rotate rigidly with said inner enclosure 12 about the axis 12a, to a second ceramic plate 19 that rests on the first ceramic plate 16 and is crossed by an adjustment port 20.

The inner enclosure 12 can rotate, about its own axis 12a, which coincides with the axis of the outer enclosure 11, with respect to said outer enclosure 11 so as to vary, by varying the position of the adjustment port 20 with respect to the inlets 3a and 3b, the cross-section of the inlets 3a, 3b that is connected to the inner chamber 14. In this manner, by rotating the inner enclosure 12 with respect to the outer enclosure 11 it is possible to vary the ratio between the flow-rate of hot water and the flow-rate of cold water fed into the second chamber 14.

The inner enclosure 12 is connected, in its rotation about the axis 12a with respect to the outer enclosure 11, to the actuation knob 8. More particularly, a connecting element 21 is connected, so as to rotate rigidly therewith about the axis 12a, to the upper face of the inner enclosure 12; said connecting element protrudes upward and has a portion 21a that can be engaged by the actuation knob so as to rotate rigidly therewith about the axis 12a.

The portion 21a of the connecting element 21 is provided externally with a prism-like shape that mates with a correspondingly shaped seat 22 formed inside the actuation knob 8. In this manner, the actuation knob 8, in its position that corresponds to the closed condition of the flow control element 5, rotates about the axis 12a rigidly with the connecting element 21 and therefore with the inner enclosure 12.

The connecting element 21 has, below the portion 21a, an annular recess 23 that allows to disengage the actuation knob 8 from the connecting element 21 in rotating about the axis 12a when the actuation knob 8 is pressed toward the faucet body 2 in order to dispense the water, as will become better apparent hereinafter.

The inner enclosure 12 has, on its lateral surface, an annular centering protrusion 25 that rests, so that it can rotate, on the inner lateral surface of the outer enclosure 11.

A sealing gasket 26 is interposed between the inner enclosure 12 and the outer enclosure 11 and isolates the first chamber 13 from the outside.

An additional sealing gasket 27 is interposed between the lower face of the inner enclosure 12 and the second ceramic plate 19.

Inside the inner enclosure 12 there is a substantially cylindrical flow control chamber 28, which is connected to the second chamber 14 by means of at least one inlet 29 and to the first chamber 13 by means of at least one outlet 30 and accommodates the flow control element 5.

The axis of the flow control chamber 28 substantially coincides with the axis 12a and the sealing element 5 is accommodated coaxially in the sealing chamber 28.

The outlet 30 is spaced upward from the inlet 29, and in the region of the second enclosure 12 that is comprised between the inlet 29 and the outlet 30 there is an annular sealing seat 31, which can be engaged by a sealing portion 5a of the flow control element 5. The flow control element 5 can move along the actuation direction 7, which is parallel to the axis 12a, through a manual action applied to the actuation knob 8 or in the opposite direction by way of the elastic reaction of a spring 33 that is interposed between the second enclosure 12 and said actuation knob 8, in order to respectively disengage the sealing seat 31 so as to allow the connection between the inlet 29 and the outlet 30 or engage the sealing portion 5a of the flow control element 5 with respect to the sealing seat 31 so as to interrupt the connection between the inlet 29 and the outlet 30.

The timed dispensing means comprise the spring 33 and a piston 34, which is fixed to the lower end of the flow control element 5. The piston 34 can slide hermetically in a control chamber 28a, which constitutes the bottom portion of the flow control chamber 28. The seal between the piston 34 and the side walls of the control chamber 28a is provided by means of a lip-type gasket 50, which separates hermetically the control chamber 28a from the flow control chamber 28 only when the piston 34 moves with the flow control element 5 in its passage from the open position to the closed position. The piston 34 is crossed, in a per se known manner, by a calibrated hole 35 that is controlled by a needle-like element 6, in a manner similar to known types of timed dispensing means.

The inner enclosure 12, particularly at the inlet 29, comprises a sleeve 38 that can rotate about the axis 12a with respect to the remaining part of the inner enclosure 12. Said sleeve 38 has, on the portion of its lateral surface that faces the inlet 29, calibrated openings 38a having mutually different dimensions, which can be placed at the inlet 29, utilizing the possibility of rotation of the sleeve 18 to rotate about the axis 12a with respect to the remaining part of the inner enclosure 12. The sleeve 38 is connected, in its rotation about the axis 12a, to the actuation knob 8 so that by rotating the actuation knob 8 with respect to the remaining part of the inner enclosure 12, when this operation is possible, i.e., when the seat 22 of the actuation knob 8 is arranged at the annular recess 23, it is possible to vary the calibrated opening 38a, which is placed at the inlet 29, thus varying the flow-rate of the water that is dispensed by the faucet.

In this manner, by means of the same actuation knob 8 it is possible to vary both the temperature and the flow-rate of the water that is dispensed.

The operation of the faucet according to the invention is as follows.

When the actuation knob 8 is pressed toward the faucet body 2 in contrast with the action applied by the spring 33, the flow control element 5 is moved from the closed position to the open position and the inlet 29 is connected to the outlet 30. In this manner, the second chamber 14 is connected to the first chamber 13, and the water that enters the second chamber 14 through the inlets 3a and 3b and the adjustment port 20 flows from the second chamber 14 to the flow control chamber 28, above the piston 34, and then from the flow control chamber 28 to the first chamber 13, from which it exits through the outlet 4 toward the dispensing outlet of the hydraulic sanitary fixture on which the faucet according to the invention is mounted.

When the actuation knob 8 has the seat 22 at the annular recess 23, it is possible to rotate the actuation knob 8 and the sleeve 38 about the axis 12a with respect to the remaining part of the inner enclosure 12. In this manner it is possible to vary the flow-rate of the water dispensed by the faucet.

It should be noted that the passage of the flow control element 5 from the closed position to the open position causes the evacuation, from the control chamber 28a located below the piston 34, of the water that is present in said chamber, transferring it above said piston 34 into the flow control chamber 28. When the actuation knob 8 is released, the flow control element 5 is returned to the closed position by the elastic reaction of the spring 33, which has been compressed during the passage of the flow control element 5 from the closed position to the open position. The return of the flow control element 5 to the closed position, however, is slowed by the fact that in the region of the control chamber 28a arranged below the piston 34 a negative pressure is formed which is reduced gradually by the return of water to said region through the calibrated hole 35.

While the flow control element 5 is in the open position, it is possible to avoid, with the faucet according to the invention, the return of the flow control element 5 to the closed position by acting on the button 9 so as to engage said button with the abutment 10 formed on a portion of the inner enclosure 12, as shown in Figure 2. By operating in this manner, the automatic closure of the faucet is prevented, making the water dispensing continuous.

When one wishes to close the faucet, it is sufficient to deactivate the button 9, disengaging it from the abutment 10.

In practice it has been found that the timed faucet according to the invention fully achieves the intended aim, because it can be used to obtain timed dispensing or continuous dispensing of water according to requirements.

The faucet thus conceived is susceptible of numerous modifications and variations, all of which are within the scope of the appended claims; moreover, all the details may be replaced with other technically equivalent elements.

In practice, the materials used, so long as they are compatible with the specific use, as well as the dimensions, may be any according to requirements and to the state of the art.

The disclosures in Italian Patent Application No. MI2001A001913 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A timed faucet switchable to continuous dispensing, comprising a faucet body (2) which has at least one water inlet (3a, 3b) and at least one water outlet (4) and a flow control element (5) that is accommodated in said faucet body (2) and can move from an open position, in which it allows the water to flow from said at least one inlet (3a, 3b) to said at least one outlet (4), to a closed position, in which it interrupts the flow of the water from said at least one inlet (3a, 3b) to said at least one outlet (4), and vice versa, said flow control element (5) being movable on command (33, 34) from said closed position to said open position, timed dispensing means being connected to said flow control element (5) for its automatic return from said open position to said closed position in a presettable time after the beginning of the dispensing action, **characterized in that** it comprises switching means (6) that can be activated on command in order to lock said flow control element (5) in said open position.

2. The faucet according to claim 1, **characterized in that** said flow control element (5), in passing from said closed position to said open position and vice versa, can perform a translational motion with respect to said faucet body (2) along an actuation direction (7); said flow control element being connected to an actuation knob (8) that is arranged outside said faucet body (2) and is rigidly coupled to said flow control element (5) in its translational motion along said actuation direction (7); said switching means (6) comprising a button (9) that is associated with said actuation knob (8) and can be moved on command from a deactivation position, in which it does not interfere with the faucet body (2), to an activation position, in which it engages an abutment (10) formed on the faucet body (2) to block the translational motion of said actuation knob (8) along said actuation direction (7) with respect to said faucet body (2).

3. The faucet according to claims 1 and 2, **characterized in that** said button (9) can move from said deactivation position to said activation position or vice versa with said flow control element (5) in the open position.

4. A faucet according to one or more of the preceding claims, **characterized in that** said button (9) is partially accommodated in said actuation knob (8).

5. The faucet according to one or more of the preceding claims, **characterized in that** said button (9) is of the lever-like type and is pivoted, through an intermediate portion, to said actuation knob (8); said button (9) being able to oscillate about its fulcrum with respect to said actuation knob (8) in order to pass from said deactivation position to said activation position or vice versa; said button (9) being provided with an elastically flexible tooth (42) that can engage selectively, with the button (9) in said deactivation position or in said activation position, seats (41a, 41b) formed in said actuation knob (8) for the stable retention of said button in said deactivation position or in said activation position.

6. The faucet according to one or more of the preceding claims, **characterized in that** said faucet body (2) has at least one cold water inlet (3b), at least one hot water inlet (3a), and at least one mixed water outlet (4), adjustment means (11, 12, 20) being provided for adjusting the passage section of said inlets in order to vary the ratio between the hot water flow-rate and the cold water flow-rate entering said faucet body (2), said adjustment means being accommodated in said faucet body (2) and being connected to actuation means (8) that are supported by said faucet body (2) and can be maneuvered from the outside of said faucet body (2).

7. The faucet according to one or more of the preceding claims, **characterized in that** said actuation means are constituted by said actuation knob (8).

8. The faucet according to one or more of the preceding claims, **characterized in that** it comprises means (38, 38a) for adjusting the dispensing flow-rate, said means (38, 38a) being connected to said actuation knob (8).
